# EUROPEAN PATENT SPECIFICATION

(11) **EP 3 327 282 B1**
(45) Date of publication and mention of the grant of the patent: **18.12.2019**
(21) Application number: 17208372.7
(22) Date of filing: 18.06.2010
(51) Int. Cl.: F03D 1/04

(54) **A PRESSURE CONTROLLED WIND TURBINE ENHANCEMENT SYSTEM**
DRUCKGESTEUERTES WINDTURBINENVERSTÄRKUNGSSYSTEM
SYSTÈME D'AMÉLIORATION DE TURBINE ÉOLIENNE COMMANDÉE PAR PRESSION

(30) Priority: 19.06.2009 IE 20090476; 31.07.2009 IE 20090598
(43) Date of publication of application: 30.05.2018
(62) Divisional of application: 10724867.6
(73) Proprietor: New World Energy Enterprises Limited, Granard, County Longford (IE)
(72) Inventor: SMYTH, James, County Cavan (IE); SMYTH, Peter, County Longford (IE); SMYTH, David, County Longford (IE); SMYTH, Gerard, County Longford (IE); SMYTH, Andrew, County Armagh (IE)
(74) Representative: FRKelly

(56) References cited:
- WO-A1-2005/005820
- WO-A1-2008/001080
- JP-U- 3 048 863

## Description

### Field of the invention

This invention relates to a pressure controlled wind turbine enhancement system which can be integrated with new wind turbines or retrofitted to existing wind turbines. The design uses a modified shroud, located directly upstream of a wind turbine. The use of a modified shroud augments the airflow directed past the blades of the turbine in a manner which provides improved power output from the turbine JP3048863U discloses a wind turbine enhancement system comprising a shroud having openings in the sidewall of the shroud.

### Background of the invention

In today's environment of global warming and environmental awareness, renewable energy is becoming more and more important, with wind turbines, both on and off shore, being the most well-established form of renewable energy. While turbines have proven a viable option for generating electricity, they do have their limitations. One of the main issues with wind turbines is a phenomenon known as the "Betz limit" which determines the maximum limit of a wind turbine's performance. This results from a pressure drop across the rotor of the turbine in which the air directly behind the blades is at sub-atmospheric pressure and the air directly in front of the blades is at greater than atmospheric pressure. This elevated pressure in front of the turbine deflects some of the wind or upstream air around the turbine, thus putting a limit on the amount of work which can be extracted by the turbine.

However, this Betz limit is rarely reached in most wind turbines, due to fluctuating wind velocities, which is another drawback when using wind turbines. Wind velocity cannot be guaranteed, and therefore the power generated by wind turbines is inconsistent, and this obviously creates issues when supplying electricity for consumption. As a result it is normally necessary to carefully select the site at which wind turbines are located, choosing sites in areas having higher prevailing wind velocities, and also generally choosing sites of moderate elevation. It is also preferable to have the blades of the turbine located at a certain height off the ground, as wind velocity is generally higher at altitude as a result of the drag experienced at ground level and the lower viscosity of the air at height. Regardless of the height however, in airflow over solid bodies such as turbine blades, turbulence is responsible for increased drag and heat transfer. Thus in such applications, and in this case wind turbines, the greater the turbulence of the air or "wind" flowing over the blades, the less efficient the transfer of energy from the wind to the turbine blades.

### Summary of the invention

According to the present invention there is provided a pressure controlled wind turbine enhancement system as set forth in claim 1.

Preferably, the gap extends around substantially the full circumference of the shroud.

Preferably, the gap extends in a substantially radial direction.

Preferably, the shroud comprises three or more sections each separated from adjacent sections by a respective gap.

Preferably, the system comprises a support securing the first and second sections relative to one another.

Preferably, the support comprises a substantially circular array of struts extending between and secured to, the first and second sections of the shroud.

Preferably, each section of the shroud is substantially conical is shape.

Preferably, the first section has a steeper taper than the second section.

Preferably, the system comprises pressure release means operable to vary the air pressure within the shroud.

Preferably, the pressure release means comprises one or more apertures in the shroud.

Preferably, the pressure release means comprises one or more flaps provided about a corresponding aperture in a wall of the shroud, the or each flap being displaceable between a closed position occluding the aperture and an open position exposing the aperture.

Preferably, the or each flap is displaceable, in use, from the closed position upon a threshold pressure being reached within the shroud.

Preferably, each flap is biased towards the closed position.

Preferably, each flap is spring biased.

Preferably, the system comprises a base on which the shroud is mounted.

Preferably, the shroud is pivotable on or with the base.

Preferably, the base comprises a platform to which a wind turbine is mountable.

Preferably, the system comprises guide means adapted to displace the system to face into the wind.

Preferably, the system comprises one or more nozzles mounted about the shroud and operable to inject air into the airflow within and/or about the shroud.

Preferably, the base comprises ducting for supplying air to the one or more nozzles.

Preferably, the one or more nozzles are formed integrally with the base.

Preferably, the system is adapted to be mounted to the exhaust of an existing air conditioning system.

Preferably, the system comprises a wind turbine with which the shroud is integrally formed.

### Brief description of the drawings

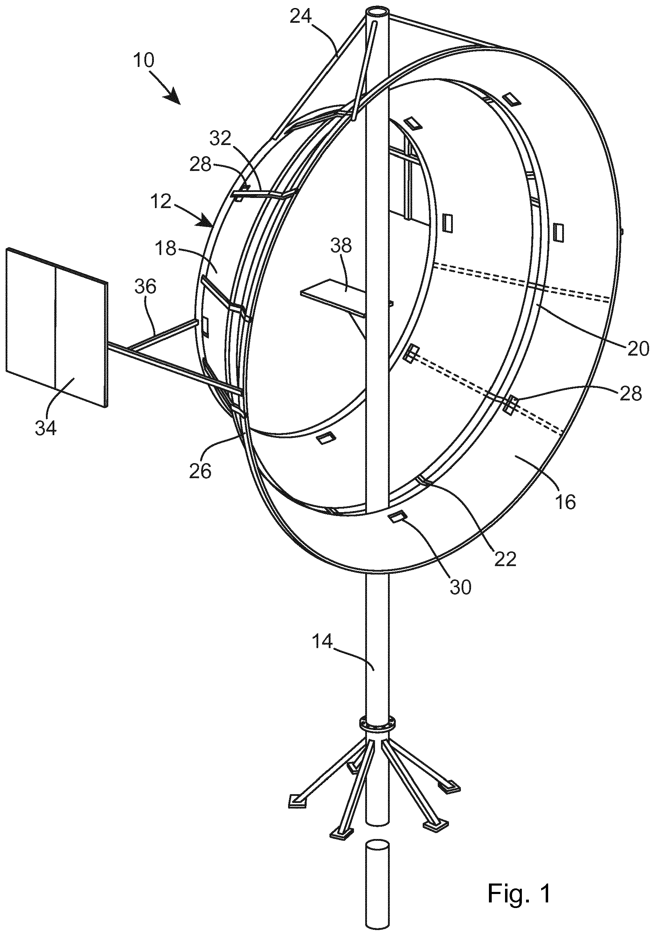

Figure 1 illustrates a front perspective view of a pressure controlled wind turbine enhancement system according to the present invention, in the absence of a wind turbine;
Figure 2 illustrates a side elevation of the pressure controlled wind turbine enhancement system of Figure 1; and

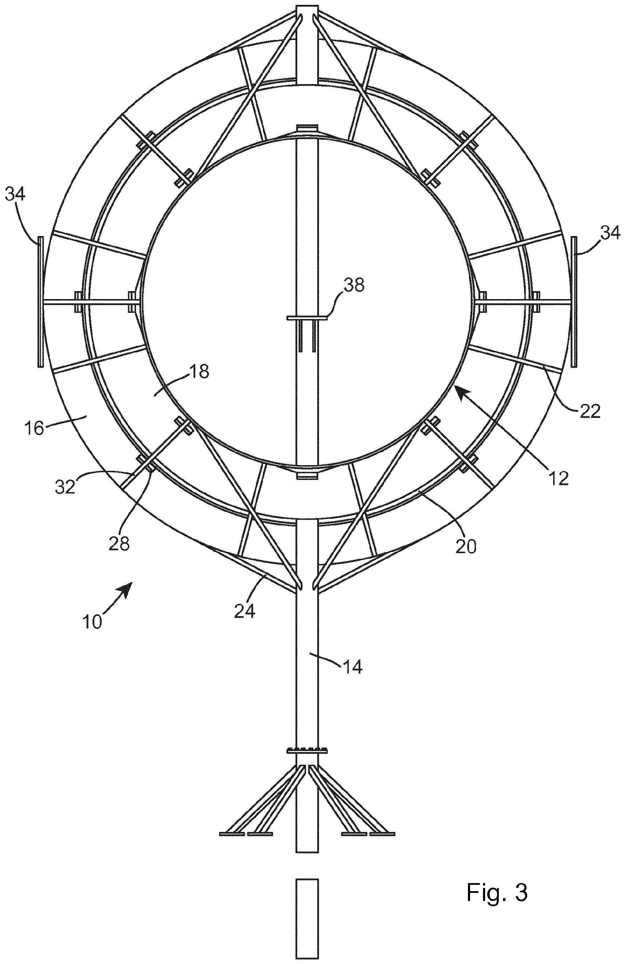

Figure 3 illustrates a front elevation of the pressure controlled wind turbine enhancement system of Figures 1 and 2.

### Detailed description of the drawings

Referring now to the accompanying drawings there is illustrated a pressure controlled wind turbine enhancement system, generally indicated as 10, which is adapted to augment the velocity and/or profile of the air flow past an otherwise conventional wind turbine (not shown) in order to improve the power output of said turbine. It will be appreciated from the following description of the drawings, that the enhancement system 10 may be retro fitted to an existing wind turbine, or may be formed integrally with a new wind turbine.

The enhancement system 10 comprises a substantially conical shroud 12 open at either end, and mounted, in the preferred embodiment illustrated, to a base 14 on which the shroud 12 can rotate in order to track the prevailing wind, as will be described in detail hereinafter.

The shroud 12 is comprised of a first section 16 and a second section 18 separated from one another by a circumferentially extending gap 20. It is also envisaged that additional sections (not shown) may be provided, with each section then being separated from adjacent sections by a respective gap (not shown). The gap 20, in the embodiment illustrated, extends in a direction substantially parallel to a longitudinal axis of the shroud 12, although alternative orientations are also envisaged.

In the embodiment illustrated the first and second sections 16, 18 are secured relative to one another by a support in the form of circular array of struts 22 extending across the gap 20 between the first and second section 16, 18 and secured thereto. The shroud 12 is then itself secured to the base 14 by a number of ties 24 extending from a position adjacent the top of the base 14, outwardly to be fixed to the shroud 12, with the same arrangement being provided at the bottom of the shroud 12. The shroud 12 is also preferably reinforced by the provision of a number of reinforcing rings 26 circumscribing both the first and second sections 16, 18. These may be of metal or any other suitable material. The shroud 12 itself may also be formed from any suitable material, for example sheet metal, fibreglass, carbon fibre or the like. It will be appreciated that the construction of the shroud 12, as well as the method of securing same to the base 14, could be varied once the underlying functionality, as provided by the gap 20 separating the first and second sections 16, 18, is maintained.

The enhancement system 10 further comprises pressure release means in the form of an array of flaps 28 in both the first section 16 and the second section 18, each flap 28 being positioned to overlie and therefore occlude a corresponding aperture 30 in the side wall of the first or second section 16, 18. The flaps 28 are displaceable between a closed position occluding the corresponding apertures 30 and an open position exposing the apertures 30, and therefore allowing airflow from the interior to the exterior of the shroud 12, as will be described in detail hereinafter.

In the embodiment illustrated the flaps 28 are spring biased toward the closed position. This is achieved by fixing each flap 28 to a cantilever arm 32 located about the exterior of the shroud 12, which arms 32 are suitably spring biased against the shroud 12. This may be achieved in a number of ways, for example by providing a leaf spring, coil spring, pneumatic/hydraulic ram, or any other functional equivalent. The spring biasing is chosen such that it may be overcome when a pre-determined pressure is reached within the shroud 12. In this way if the pressure extends beyond that pre-determined value, the flaps 28 will be forced outwardly in order to expose the corresponding apertures 30, thereby relieving the pressure within the shroud 12. The purpose of this pressure release is described in detail hereinafter. It will be appreciated that the operation of the flaps 28 may be controlled by any other suitable means, for example using electronic control means cooperating with suitable actuators (not shown) to control the movement of the flaps 28. A pressure sensor (not shown) could be provided to monitor the pressure within the shroud 12, and communicate this information to the electronic control means in order to allow correct control of the flaps 28.

Finally, the system 10 comprises a pair of guide vanes 34 mounted outboard of the shroud 12 on a frame 36 extending from the reinforcing rings 26. The guide vanes 34 are positioned to allow the enhancement system 10 to weather vane in order to track the prevailing winds and therefore maximise the energy channelled onto the wind turbine (not shown). This may be achieved in a number of alternative ways, for example use of a single guide vane extending from the base 14 or the shroud 12, or by using an electronic and/or mechanical actuator (not shown) in order to track the prevailing wind and rotate the shroud 12 or the enhancement system 10, above a bearing or yaw mechanism (not shown) to follow.

Turning then to the operation of the enhancement system 10, the shroud 12 is of substantially truncated conical shape, whereby the first section 16 has a steeper taper than the second section 18. The overall profile of the shroud 12 is conical, and in use a wind turbine (not shown) is mounted directly downstream of the smaller diameter end as defined by the second section 18. The turbine (not shown) is preferably mounted to a platform 38 provided on the base 14, for example via a hub of the turbine (not shown). The turbine may however be secured relative to the enhancement system 10 by any other suitable means, and it is envisaged that the turbine (not shown) may use a separate support (not shown) than that of the enhancement system 10. The system 10 is then allowed to weather vane to face into the oncoming wind, which is then captured by the shroud 12 and the airflow thus accelerated and redirected onto and across the blades of the turbine, in order to generate electricity.

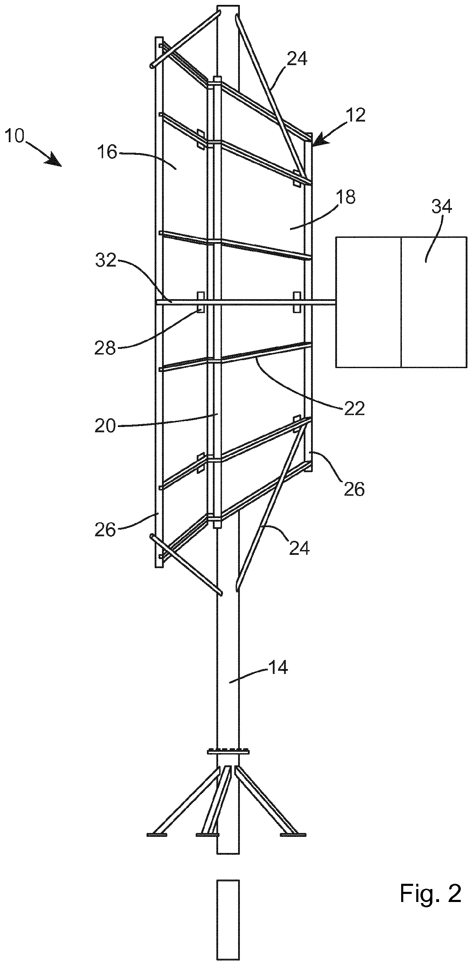

In use, the initially turbulent wind flows into the first section 16 of the shroud 12, and due to the tapered shape of the first section 16, this wind is accelerated and redirected through the shroud 12, while partially reducing the turbulence of the wind. The wind then passes into the second section 18, with the gap 20 forming a transition between the first and second sections 16, 18. As mentioned above, the second section 18 has a shallower angle or taper relative to the first section 16, as can be clearly seen in Figure 2. In order to avoid excess pressure build up of the airflow on the interior sidewall of the shroud 12 as it passes from the first section 16 to the second section 18, the gap 20 allows some pressure to be alleviated from the interior of the shroud 12, in order to accelerate the airflow and maintain the continuity of airflow and therefore prevent the introduction of turbulence at the transition between the first and second sections 16, 18. The air then continues through the second section 18, where its velocity is again increased due to the taper of the second section 18, and the remaining turbulence is significantly reduced or eliminated. The accelerated airflow then exits the second section 18 and flows across the wind turbine (not shown) in order to generate electricity or mechanical energy.

By reducing the taper on the second section 18 relative to the first section 16, the increase in pressure across the shroud 12 can be controlled, in order to prevent excessive pressure being developed, which can restrict the volume of air which can then pass through the shroud 12. However, depending on the local wind conditions, pressure spikes within the shroud 12 may still be experienced, leading to inconsistent airflow through the shroud 12, and therefore inconsistent power generation via the wind turbine (not shown). In order to overcome this problem the turbine system 10 is provided with the pressure release means in the form of the array of flaps 28 and corresponding apertures 30 in the shroud 12. In the embodiment illustrated the pressure release means are provided in both the first and second section 16, 18, although it will be appreciated that it could be restricted to one or other section or omitted entirely. Thus when such a pressure spike is building within the shroud 12 the array or flaps 28 will be forced open against their spring biasing, thereby allowing a reduction in the pressure within the shroud 12. This will thus ensure a consistent airflow through the shroud 12, in order to maximise the energy transferred to the wind turbine (not shown). Depending on the dimensions of the system 10, and in particular the shroud 12, the threshold pressure at which the flaps 28 will open may be varied by altering the spring biasing of same. It is also envisaged that the pressure release means could take forms other than the array of flaps 28, once the underlying pressure reducing functionality is maintained.

It will be appreciated that the basic shape and/or configuration of the system 10 may be varied while maintaining the above-mentioned functionality. As an example, the interior or the exterior surface of the shroud 12, or the guide vanes 34, could be provided with means for harvesting solar energy (not shown) mounted thereon, in order to supplement the power generated by the turbine itself. Alternatively the electricity generated by such solar energy harvesting means could be used to drive a starter motor of the wind turbine (not shown), in order to allow the turbine to operate during periods of reduced wind speed.

In addition, the system 10 could comprise one or more nozzles (not shown) provided about the shroud 12 and adapted to issue high velocity jets of air towards or into the shroud 12, at a velocity and in a direction which conditions the airflow by both reducing the turbulence, controlling the pressure and increasing the velocity of air flowing through the shroud 12. The number and design of nozzles, in addition to the positioning of same about the shroud 12, may be varied as required. For example, it is envisaged that the base 14 could itself form a nozzle, with air being supplied through the interior of the base 14 and one or more apertures or nozzles (not shown) being formed in the sidewall of the base 14, at a position facing the interior of the shroud 12. In this was the jets of air would issue directly from the base 14, avoiding the requirement to provide a separate array of nozzles.

The enhancement system 10 could be mounted, for example, with the shroud 12 in the locality of the exhaust of a relatively large scale ventilation system (not shown) for example as used in an underground car park or large office building or the like. Thus rather than wasting the energy in the exhausted air, it could be used to power a turbine, with the aid of the enhancement system 10, in order to generate power.

By using the pressure controller shroud 12 of the present invention, a wind turbine can have an increased energy output.

It should also be noted that as the turbine is producing more energy per m² of the sweep area, the blades can be reduced in size, and the height at which the blades are positioned, can also be reduced, thereby reducing the initial cost of the turbine and increasing the number of sites at which wind turbines can be deployed.

The pressure controlled wind turbine enhancement system 10 of the present invention therefore provides a simple yet highly effective means and method of improving the performance of a wind turbine. The enhancement system 10 involves very few moving parts, which is beneficial for reliability while also minimizing cost. The various components of the turbine system 10 may be manufactured from any suitable material, but preferably from a lightweight material such as plastic, a composite, or other material.

## Claims

1. A pressure controlled wind turbine enhancement system (10) comprising a shroud (12), the shroud comprising in axial direction at least first (16) and second (18) sections separated from one another by a circumferentially extending gap (20) wherein the first section has a steeper taper than the second section, the gap allowing pressure to be alleviated from the interior of the shroud in order to accelerate the airflow and maintain the continuity of airflow, and therefore prevent the introduction of turbulence, at the transition between the first and second sections.

2. A system according to claim 1 in which the gap extends around substantially the full circumference of the shroud.

3. A system according to claim 1 or 2 in which the gap extends in a substantially radial direction.

4. A system according to any preceding claim in which the shroud comprises three or more sections each separated from adjacent sections by a respective gap.

5. A system according to any preceding claim comprising a support securing the first and second sections relative to one another.

6. A system according to claim 5 in which the support comprises a substantially circular array of struts extending between and secured to, the first and second sections of the shroud.

7. A system according to any preceding claim in which each section of the shroud is substantially conical is shape.

8. A system according to any preceding claim comprising pressure release means operable to vary the air pressure within the shroud.

9. A system according to claim 8 in which the pressure release means comprises one or more apertures in the shroud.

10. A system according to claim 8 in which the pressure release means comprises one or more flaps provided about a corresponding aperture in a wall of the shroud, the or each flap being displaceable between a closed position occluding the aperture and an open position exposing the aperture.

11. A system according to claim 10 in which the or each flap is displaceable, in use, from the closed position upon a threshold pressure being reached within the shroud.

12. A system according to claim 10 or 11 in which each flap is biased towards the closed position.

13. A system according to claim 12 in which each flap is spring biased.

14. A system according to any preceding claim comprising a base on which the shroud is mounted.

15. A system according to any preceding claim comprising a wind turbine with which the shroud is integrally formed

## Patentansprüche

1. Druckgesteuertes Windturbinenverstärkungssystem (10), umfassend eine Ummantelung (12), wobei die Ummantelung in axialer Richtung mindestens einen ersten (16) und einen zweiten (18) Abschnitt umfasst, die voneinander durch einen sich in Umfangsrichtung erstreckenden Spalt (20) getrennt sind, wobei der erste Abschnitt eine steilere Verjüngung aufweist als der zweite Abschnitt, wobei der Spalt ermöglicht, Druck vom Inneren der Ummantelung abzulassen, um den Luftstrom zu beschleunigen und die Kontinuität des Luftstroms aufrechtzuerhalten und damit die Einführung einer Verwirbelung an dem Übergang zwischen dem ersten und zweiten Abschnitt zu verhindern.

2. System nach Anspruch 1, wobei der Spalt sich im Wesentlichen um den vollen Umfang der Ummantelung erstreckt.

3. System nach Anspruch 1 oder 2, wobei der Spalt sich in eine im Wesentlichen radiale Richtung erstreckt.

4. System nach einem der vorangehenden Ansprüche, wobei die Ummantelung drei oder mehrere Abschnitte umfasst, die jeweils durch einen jeweiligen Spalt von benachbarten Abschnitten getrennt sind.

5. System nach einem der vorangehenden Ansprüche, umfassend eine Abstützung, die den ersten und zweiten Abschnitt relativ zueinander sichert.

6. System nach Anspruch 5, wobei die Abstützung eine im Wesentlichen kreisförmige Anordnung von Streben umfasst, die sich zwischen dem ersten und zweiten Abschnitt der Ummantelung erstrecken und daran gesichert sind.

7. System nach einem der vorangehenden Ansprüche, wobei jeder Abschnitt der Ummantelung eine im Wesentlichen konische Form aufweist.

8. System nach einem der vorangehenden Ansprüche, umfassend ein Druckentlastungsmittel, das zum Variieren des Luftdrucks in der Ummantelung betätigbar ist.

9. System nach Anspruch 8, wobei das Druckentlastungsmittel eine oder mehrere Öffnungen in der Ummantelung umfasst.

10. System nach Anspruch 8, wobei das Druckentlastungsmittel eine oder mehrere Klappen um eine entsprechende Öffnung in einer Wand der Ummantelung umfasst, wobei die oder jede Klappe zwischen einer geschlossenen Position, die die Öffnung verschließt, und einer offenen Position, die die Öffnung offenlegt, verstellbar ist.

11. System nach Anspruch 10, wobei die oder jede Klappe bei Gebrauch von der geschlossenen Position verstellbar ist, wenn ein Schwellendruck in der Ummantelung erreicht wird.

12. System nach Anspruch 10 oder 11, wobei jede Klappe zur geschlossenen Position hin vorgespannt ist.

13. System nach Anspruch 12, wobei jede Klappe federvorgespannt ist.

14. System nach einem der vorangehenden Ansprüche, umfassend eine Basis, auf der die Ummantelung montiert ist.

15. System nach einem der vorangehenden Ansprüche, umfassend eine Windturbine, mit der die Ummantelung einstückig ausgebildet ist.

## Revendications

1. Système d'amélioration de turbine éolienne à régulation de pression (10), comprenant un flasque (12), le flasque comprenant dans une direction axiale au moins des première (16) et deuxième (18) sections séparées l'une de l'autre par un espace s'étendant de manière circonférentielle (20) dans lequel la première section a une inclinaison plus raide que la deuxième section, l'espace permettant à la pression d'être atténuée à partir de l'intérieur du flasque afin d'accélérer le flux d'air et maintenir la continuité du flux d'air, et éviter ainsi l'introduction d'une turbulence, et la transition entre les première et deuxième sections.

2. Système selon la revendication 1, dans lequel l'espace s'étend autour de sensiblement la totalité de la circonférence du flasque.

3. Système selon la revendication 1 ou 2, dans lequel l'espace s'étend dans une direction sensiblement radiale.

4. Système selon une quelconque revendication précédente, dans lequel le flasque comprend trois sections ou plus, chacune séparée des sections adjacentes par un espace respectif.

5. Système selon une quelconque revendication précédente, comprenant un support fixant les première et deuxième sections l'une par rapport à l'autre.

6. Système selon la revendication 5, dans lequel le support comprend un réseau sensiblement circulaire de contre-fiches s'étendant entre et fixées aux première et deuxième sections du flasque.

7. Système selon une quelconque revendication précédente dans lequel chaque section du flasque est de forme sensiblement conique.

8. Système selon une quelconque revendication précédente comprenant un moyen de détente de pression fonctionnant pour modifier la pression de l'air à l'intérieur du flasque.

9. Système selon la revendication 8, dans lequel le moyen de détente de pression comprend une ou plusieurs ouvertures dans le flasque.

10. Système selon la revendication 8, dans lequel le moyen de détente de pression comprend un ou plusieurs clapets fournis autour d'une ouverture correspondante dans une paroi du flasque, le ou chaque clapet étant déplaçable entre une position fermée bouchant l'ouverture et une position ouverte exposant l'ouverture.

11. Système selon la revendication 10, dans lesquels le ou chaque clapet est déplaçable, lors de l'utilisation, à partir de la position fermée dès qu'une pression seuil est atteinte à l'intérieur du flasque.

12. Système selon la revendication 10 ou 11, dans lequel chaque clapet est sollicité vers la position fermée.

13. Système selon la revendication 12, dans lequel chaque clapet est sollicité par ressort.

14. Système selon une quelconque revendication précédente comprenant une base sur laquelle le flasque est monté.

15. Système selon une quelconque revendication précédente comprenant une turbine éolienne avec laquelle le flasque est formé en une seule pièce.
